# EUROPÄISCHE PATENTANMELDUNG

(11) **EP 2 103 829 A2**
(43) Veröffentlichungstag der Anmeldung: **23.09.2009**
(21) Anmeldenummer: 09152516.2
(22) Anmeldetag: 11.02.2009
(51) Int. Cl.: F16D 57/04

(54) **Hydrodynamischer Retarder**

(30) Priorität: 19.03.2008 DE 102008000762
(71) Anmelder: ZF Friedrichshafen AG, 88038 Friedrichshafen (DE)
(72) Erfinder: Ulmer, Andreas, 88046, Friedrichshafen (DE); Zirkl, Otwin, 88069, Tettnang (DE)

(57) **Zusammenfassung**

Es wird ein hydrodynamischer Retarder umfassend einen Rotor (3) und einen Stator (3) vorgeschlagen, bei dem zur Verdrängung der Luft im Torus (1) des Stators (4) und/oder des Rotors (3) ein Ring (2) vorgesehen ist.

## Beschreibung

Die vorliegende Erfindung bezieht sich auf einen hydrodynamischen Retarder gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten oder das Fahrzeug bis nahe an den Stillstand zu verzögern.

Zu den Retardern werden sowohl zusätzlich am Getriebe angeordnete hydrodynamische, hydrostatische oder elektrodynamische Bremseinrichtungen gezählt, sowie auch Systeme, die innerhalb des Getriebegehäuses vorgesehen sind.

Bei hydrodynamischen Retardersystemen wird das Bremsmoment durch den Füllgrad des Betriebsmediums, beispielsweise des Öls, eingestellt. Hierbei wird die Strömungsenergie des Betriebsmediums zum Bremsen benutzt, wobei das physikalische Wirkprinzip dem einer hydrodynamischen Kupplung mit feststehender Turbine entspricht. Demnach weist ein hydrodynamischer Retarder mindestens einen sich im Leistungsfluss befindlichen Rotor und mindestens einen mit dem Retardergehäuse fest verbundenen Stator auf. Beim Betätigen des Retarders wird eine der gewünschten Bremsleistung entsprechende Ölmenge in den Arbeitsraum eingebracht, wobei der drehende Rotor das Öl mitnimmt und sich am Stator abstützt, wodurch eine Bremswirkung auf die Rotorwelle erzeugt wird.

Ein Beispiel einer Bremsanlage mit einem hydrodynamischen Retarder ist in der DE-C-198 53 830 beschrieben. Der hydrodynamische Retarder weist dabei einen Rotor und einen Stator auf, die ihrerseits einen Arbeitsraum miteinander bilden, sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Kühlungsgrades des Arbeitsraumes, wobei Retarder und Kühleinrichtung im Bremsbetrieb im Sinne eines Kreislaufes vom Arbeitsmedium durchströmt werden.

Bei hydrodynamischen Retardern bildet sich zwischen dem drehenden Schaufelrad d.h. dem Rotor und dem stehenden Schaufelrad d.h. dem Stator ein ringförmiger Torusraum. Durch die Drehung des Rotors wird das Medium, welches zur Erzeugung des Bremsmomentes erforderlich ist, durch die Zentrifugalkräfte an die Wandungen des Rotors und des Stators gedrückt, wodurch in nachteiliger Weise ausgehend vom Toruszentrum radial nach außen kein oder nur wenig Medium vorhanden ist, was darin resultiert, dass dieser Bereich nicht wesentlich zur Erzeugung des Bremsmomentes beiträgt; erst bei größer werdendem Radius ausgehend vom Toruszentrum steigt der Anteil des Mediums. Die sich sammelnde Luft im Toruszentrum bildet in Verbindung mit dem Medium ein schwingfähiges Feder-Masse-System, so dass die Notwendigkeit entsteht, zur Stabilisierung des Systems, die Luftmenge im Torusraum zu minimieren.

Zu Beginn des Retarderbetriebs ist der Retarder mit Luft befüllt. Wird der Retarder eingeschaltet, muss zunächst die Luft verdrängt werden, um Bremsmoment erzeugen zu können. Je geringer das Volumen der zu verdrängenden Luft ist, desto schneller kann der Retarder das gewünschte Bremsmoment erzeugen.

Aus der DE 3143280 A1 ist ein hydrodynamischer Retarder für ein Kraftfahrzeug bekannt, bei dem Schaufeln von Rotor und Stator den Außentorus eines hydrodynamischen Arbeitskreislaufes begrenzen und ein zum Stator bewegungsfester Austrittskanal einerseits im Bereich des Außentorus an den Arbeitskreislauf und andererseits an einen äußeren Kühlkreislauf für das hydraulische Arbeitsmittel angeschlossen ist. Zudem ist am Stator wenigstens eine nach Art eines Ringsegmentes ausgebildete Blende zur Reduzierung von Leerlaufverlusten in Bezug auf die Retarderdrehachse im axialen Bereich eines zwischen den rotorseitigen und den statorseitigen Schaufeln belassenen Spaltes angeordnet, die zwischen einer außerhalb der Strömung des Arbeitskreislaufes liegenden Ruhestellung und einer zumindest teilweise in der Strömung des Arbeitskreislaufes liegenden Staustellung verlagerbar ist.

Bei dem bekannten Retarder ist der Austrittskanal spiralförmig ausgebildet und mündet tangential zum rotorseitigen Abschnitt des Außentorus in den Spalt ein. Ferner weist der Stator einen mit seinem Querschnitt etwa zentrisch innerhalb des Außentorus liegenden Kernring auf, wobei die Blende am Kernring angeordnet ist und in der Ruhestellung innerhalb des radialen Ringbereiches des Kernringes liegt. Durch diese Konstruktion soll eine verlustarme Umsetzung von Geschwindigkeitsenergie in Druckenergie an der Einmündung des Austrittskanals in den Arbeitskreislauf ohne eine durch die Blenden bedingte Störung erzielt werden.

Des weiteren ist aus der DE 198 51 951 A1 der Anmelderin ein hydrodynamischer Retarder bekannt, mit einem Rotor und einem Stator, welcher zur Verminderung von Ventilationsverlusten im Leerlaufbetrieb ein bewegliches Strömungshindernis aufweist, das als Trennwand in Form von ein- oder mehrteiligen glatten Ringsegmenten ausgebildet ist. Hierbei ist jeweils ein Ende eines jeden Ringsegmentes an einer Drehachse in der Nähe der Torusinnenwand gelenkig befestigt, während das jeweils andere Ende eines jeden Ringsegmentes mit einer Verstelleinrichtung verbunden ist, die ein Verschwenken der Ringsegmente ermöglicht.

Der vorliegenden Erfindung liegt die Aufgabe zugrunde, einen hydrodynamischen Retarder anzugeben, bei dem die Luftmenge im Torusraum minimiert wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein hydrodynamischer Retarder umfassend einen Rotor und einen Stator vorgeschlagen, bei dem zur Verdrängung der Luft im Torus des Stators und/oder des Rotors ein Ring vorgesehen ist.

Gemäß der Erfindung kann der Ring als Hohlkörper oder als Vollkörper ausgeführt sein. Des weiteren kann der Ring einen elliptischen, runden oder vieleckigen Querschnitt aufweisen, wobei der Querschnitt und/oder der Durchmesser des Rings über den Umfang variabel sein kann.

Gemäß einer weiteren Ausgestaltung der Erfindung kann der Ring über den Umfang in Segmente aufgeteilt ausgeführt sein, wobei optional ein Teil der Segmente am Rotor und ein Teil der Segmente am Stator vorgesehen ist. Beispielsweise kann der Ring geteilt ausgeführt sein, wobei optional eine Hälfte am Rotor und die andere Hälfte am Stator vorgesehen ist.

Im Rahmen einer vorteilhaften Weiterbildung der Erfindung entspricht die Anzahl der Segmente eines Rings der Anzahl der Schaufeln des Rotors bzw. des Stators; die Schaufeln können gegossen oder umgeformt sein.

Zur Befestigung des Rings wird vorgeschlagen, dass der Ring bzw. die Ringsegmente mit den Schaufeln verlötet, verklebt oder verschweißt sind. Alternativ kann der Ring bzw. können die Segmente in den Schaufeln mechanisch fixiert, beispielsweise eingepresst sein.

Des weiteren kann der Ring bzw. können die Ringsegmente in der Rotor- und/oder Statorschale befestigt sein, wobei die Befestigung durch Verlöten, Verkleben oder Verschweißen oder durch eine mechanische Fixierung erfolgen kann.

Gemäß einer weiteren Ausgestaltung der Erfindung kann der Ring bzw. können die Ringsegmente in der Rotor- bzw. Statorschale und in den Schaufeln des Rotors bzw. Stators befestigt sein. Ferner kann vorgesehen sein, dass der Ring bzw. die Ringsegmente am Retardergehäuse befestigt sind.

Die Erfindung wird im folgenden anhand der beigefügten Zeichnung beispielhaft näher erläutert.
Es zeigen:
- Fig. 1: eine schematische Ansicht eines Torus eines Schaufelrades eines hydrodynamischen Retarders, umfassend einen umlaufenden Ring gemäß einer bevorzugten Ausführungsform der Erfindung und
- Fig. 2: eine schematische Schnittansicht des Torus eines gemäß der Erfindung ausgeführten hydrodynamischen Retarders.

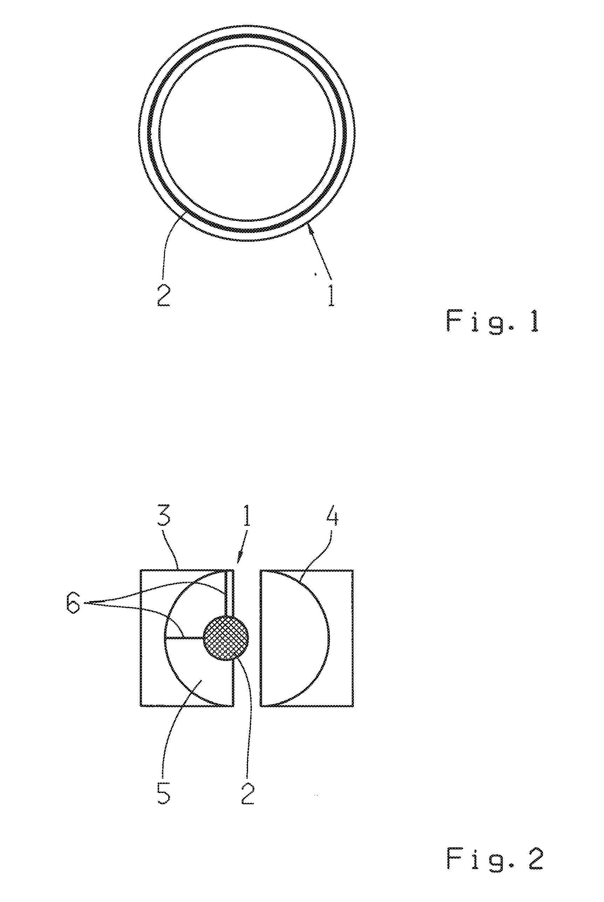

In Fig. 1 ist der Torus 1 eines Schaufelrades, d.h. des Rotors oder des Stators eines hydrodynamischen Retarders dargestellt. Wie aus der Fig. 1 ersichtlich, ist zur Verdrängung der Luft im Torus ein umlaufender Ring 2 vorgesehen. Der Ring 2 kann an den Schaufeln und/oder in der Schale des Rotors bzw. des Stators oder alternativ am Retardergehäuse befestigt sein.

Fig. 2 ist eine schematische Schnittansicht durch einen Torus 1 eines gemäß der Erfindung ausgeführten hydrodynamischen Retarders. In der Fig. 2 ist der Rotor mit 3 und der Stator mit 4 bezeichnet. Wie Fig. 2 zu entnehmen, ist im Torus des Retarders 3 ein Ring 2 vorgesehen, welcher an den Schaufeln 5 des Retarders befestigt ist; bei dem gezeigten Beispiel erfolgt die Befestigung des Rings 2 in den Schaufeln mittels mechanischer Anbindungselemente 6.

Die erfindungsgemäß erzielbare Verringerung des Luftanteils im Torusraum des hydrodynamischen Retarders bewirkt, dass sich das Befüll- und Entleerverhalten des Retarders positiv verändert. Dies bedeutet, dass die zu verdrängende Luft im Torusraum durch den Ring auf ein Minimum beschränkt wird, wodurch die Befüll- und Entleervorgänge erheblich schneller durchgeführt werden können.

### Bezugszeichen

- 1: Torus
- 2: Ring
- 3: Rotor
- 4: Stator
- 5: Schaufel
- 6: Anbindungselement

## Patentansprüche

1. Hydrodynamischer Retarder umfassend einen Rotor (3) und einen Stator (3), **dadurch gekennzeichnet, dass** zur Verdrängung der Luft im Torus (1) des Stators (4) und/oder des Rotors (3) ein Ring (2) vorgesehen ist.

2. Hydrodynamischer Retarder umfassend einen Rotor (3) und einen Stator (3), nach Anspruch 1, **dadurch gekennzeichnet, dass** der Ring (2) über den Umfang in Segmente aufgeteilt ausgeführt ist.

3. Hydrodynamischer Retarder umfassend einen Rotor (3) und einen Stator (3), nach Anspruch 2, **dadurch gekennzeichnet, dass** ein Teil der Ringsegmente am Rotor (3) und ein Teil der Ringsegmente am Stator (4) vorgesehen ist.

4. Hydrodynamischer Retarder umfassend einen Rotor (3) und einen Stator (3), nach Anspruch 3, **dadurch gekennzeichnet, dass** der Ring (2) geteilt ausgeführt ist, wobei eine Hälfte des Rings am Rotor (3) und die andere Hälfte am Stator (4) vorgesehen ist.

5. Hydrodynamischer Retarder umfassend einen Rotor (3) und einen Stator (3), nach Anspruch 3, **dadurch gekennzeichnet, dass** die Anzahl der Segmente eines Rings der Anzahl der Schaufeln des Rotors (3) bzw. des Stators (4) entspricht.

6. Hydrodynamischer Retarder umfassend einen Rotor (3) und einen Stator (3), nach einem der vorangehenden Ansprüche, **dadurch gekennzeichnet, dass** der Ring (2) als Hohlkörper oder als Vollkörper ausgeführt ist.

7. Hydrodynamischer Retarder umfassend einen Rotor (3) und einen Stator (3), nach einem der vorangehenden Ansprüche, **dadurch gekennzeichnet, dass** der Ring einen elliptischen, runden oder vieleckigen Querschnitt aufweist.

8. Hydrodynamischer Retarder umfassend einen Rotor (3) und einen Stator (3), nach Anspruch 7, **dadurch gekennzeichnet, dass** der Querschnitt und/oder der Durchmesser des Rings (2) über den Umfang variabel ausgeführt ist.

9. Hydrodynamischer Retarder umfassend einen Rotor (3) und einen Stator (3), nach einem der vorangehenden Ansprüche, **dadurch gekennzeichnet, dass** der Ring (2) bzw. die Ringsegmente an den Schaufeln (5) des Rotors (3) und/oder des Stators (4) vorgesehen sind.

10. Hydrodynamischer Retarder umfassend einen Rotor (3) und einen Stator (3), nach Anspruch 9, **dadurch gekennzeichnet, dass** der Ring (2) bzw. die Ringsegmente mit den Schaufeln (5) verlötet, verklebt oder verschweißt sind.

11. Hydrodynamischer Retarder umfassend einen Rotor (3) und einen Stator (3), nach Anspruch 9, **dadurch gekennzeichnet, dass** der Ring (2) bzw. die Ringsegmente in den Schaufeln (5) mechanisch fixiert sind.

12. Hydrodynamischer Retarder umfassend einen Rotor (3) und einen Stator (3), nach Anspruch 11, **dadurch gekennzeichnet, dass** der Ring (2) bzw. die Ringsegmente in den Schaufeln (5) eingepresst oder mittels mechanischer Anbindungselemente befestigt sind.

13. Hydrodynamischer Retarder umfassend einen Rotor (3) und einen Stator (3), nach einem der vorangehenden Ansprüche 1 bis 8, **dadurch gekennzeichnet, dass** der Ring (2) bzw. die Ringsegmente in der Rotor- und/oder Statorschale befestigt sind, wobei die Befestigung durch Verlöten, Verkleben oder Verschweißen oder durch eine mechanische Fixierung erfolgt.

14. Hydrodynamischer Retarder umfassend einen Rotor (3) und einen Stator (3), nach einem der vorangehenden Ansprüche 1 bis 8, **dadurch gekennzeichnet, dass** der Ring (2) bzw. die Ringsegmente in der Rotor- bzw. Statorschale und in den Schaufeln des Rotors bzw. Stators befestigt ist, wobei die Befestigung durch Verlöten, Verkleben oder Verschweißen oder durch eine mechanische Fixierung erfolgt.

15. Hydrodynamischer Retarder umfassend einen Rotor (3) und einen Stator (3), nach einem der vorangehenden Ansprüche 1 bis 8, **dadurch gekennzeichnet, dass** der Ring (2) bzw. die Ringsegmente am Retardergehäuse befestigt sind.
